# EUROPÄISCHE PATENTSCHRIFT

(11) **EP 3 682 198 B1**
(45) Veröffentlichungstag und Bekanntmachung des Hinweises auf die Patenterteilung: **16.08.2023**
(21) Anmeldenummer: 18756220.2
(22) Anmeldetag: 16.08.2018
(51) Int. Cl.: G01F 1/58

(54) **MAGNETISCH-INDUKTIVES DURCHFLUSSMESSGERÄT**
MAGNETIC-INDUCTIVE FLOWMETER
DÉBITMÈTRE À INDUCTION MAGNÉTIQUE

(30) Priorität: 13.09.2017 DE 102017121155
(43) Veröffentlichungstag der Anmeldung: 22.07.2020
(73) Patentinhaber: Endress+Hauser Flowtec AG, 4153 Reinach (CH)
(72) Erfinder: TSCHUDIN, Beat, 4153 Reinach (CH)
(74) Vertreter: Penner, Paul
(86) Internationale Anmeldenummer: PCT/EP2018/072222
(87) Internationale Veröffentlichungsnummer: WO 2019/052770

(56) Entgegenhaltungen:
- DE-A1- 3 501 768
- DE-A1- 19 958 285
- JP-A- H04 128 613
- US-A- 3 446 071
- US-A1- 2017 052 047

## Beschreibung

Diese Erfindung betrifft ein magnetisch-induktives Durchflussmessgerät zur Messung der Durchflussgeschwindigkeit bzw. des Volumendurchflusses eines durch ein Messrohr strömenden Mediums.

Magnetisch-induktive Durchflussmessgeräte sind seit langem Stand der Technik. Das Funktionsprinzip basiert darauf, dass in elektrisch leitfähigen Medien mittels eines Magnetfelds eine strömungsgeschwindigkeitsabhängige elektrische Spannung induziert werden kann, welche elektrische Spannung sich zur Messung der Strömungsgeschwindigkeit bzw. des Flusses des Mediums auswerten lässt.

Üblicherweise weisen magnetisch-induktive Durchflussmessgeräte ein Messrohr, ein Magnetsystem mit zwei auf gegenüberliegenden Seiten des Messrohrs liegende Spulensysteme zum Erzeugen eines zu einer Messrohrachse senkrecht stehendes Magnetfeld und mindestens zwei in oder am Messrohr angeordnete Messelektroden zum Abgreifen der im Medium induzierten elektrischen Spannung auf. Um das Magnetfeld außerhalb des Messrohrs möglichst unabhängig von der Umgebung des Durchflussmessgeräts zu machen, weist ein solches Durchflussmessgerät eine metallische Feldführung auf, welche das Magnetfeld außerhalb des Messrohrs zwischen den Spulensystemen leitet.

Die Anbindung der Feldführung an die Spulensysteme erweist sich dabei als kritisch, da eine mangelhafte Anbindung den magnetischen Widerstand des Systems Magnetsystem - Feldführung beträchtlich erhöhen kann. Dies hat eine geringere Magnetfeldstärke im Messrohr zur Folge und somit ein verschlechtertes Signal-Rauschen-Verhältnis der Messung der induzierten elektrischen Spannung. Der Stand der Technik, wie beispielsweise in der Schrift DE202014103426U1 gezeigt, stattet beispielsweise Spulen mit Polschuhen aus, welche Polschuhe eine ebene Kontaktfläche zur Auflage oder zum Einklemmen der Feldführung aufweisen. Geringe Änderungen eines Anpressdrucks führen bereits zu starken Änderungen des magnetischen Widerstands.

Die DE3501768A1 offenbart einen elektromagnetischen Durchflussmesser, bei welchem Durchflussmesser Polschuhe an eine Messrohrkrümmung angepasst sind.

Die DE19958285A1 offenbart ein magnetisch-induktives Durchflussmessgerät, bei welchem ein Polschuhabschnitt rechtwinklig ausgeformt ist und in einen Zentralbereich einer Spule hineinragt.

Die US3446071A1 zeigt ein elektromagnetisches Durchflussmessgerät zum Messen eines Blutflusses in einem Blutgefäß.

Die US2017052047A1 offenbart einen magnetischen Durchflussmesser, bei welchem ein Abgriff bei magnetischen Polstücken so ausgestaltet ist, dass eine zwischen Elektroden induzierte mechanische Spannung reduziert ist.

Die JPH04128613A offenbart einen elektromagnetischen Durchflussmesser, bei welchem Verluste eines magnetischen Flusses vermindert sind.

Aufgabe der Erfindung ist es, eine verbesserte Anbindung der Feldführung an das Magnetsystem vorzuschlagen.

Die Aufgabe wird gelöst durch ein magnetisch-induktives Durchflussmessgerät gemäß Anspruch 1.

Ein erfindungsgemäßes magnetisch-induktives Durchflussmessgerät zur Messung der Durchflussgeschwindigkeit bzw. des Volumendurchflusses eines durch ein Messrohr strömenden Mediums umfasst:
Ein Messrohr mit einer Messrohrachse;
Ein Magnetsystem mit einer ersten Spule und einem ersten, innerhalb der ersten Spule angeordneten Spulenkern, wobei das Magnetsystem zum Erzeugen eines Magnetfelds eingerichtet ist, welches senkrecht zur Messrohrachse steht;
Mindestens zwei Messelektroden zum Abgreifen einer im Medium durch das Magnetfeld induzierten, durchflussabhängigen elektrischen Spannung, wobei die Messelektroden im oder am Messrohr angeordnet sind und dazu eingerichtet sind, die Spannung kapazitiv oder galvanisch abzugreifen;
Eine elektronische Mess-/Betriebsschaltung zum Betreiben des Magnetsystems sowie der Messelektroden;
Eine Feldführung, welche dazu eingerichtet ist, das Magnetfeld zwischen einer dem Messrohr abgewandten Seite der ersten Spule und einer der ersten Spule abgewandten Seite des Messrohrs zu führen,
wobei das Magnetsystem einen ersten Polschuh aufweist, welcher dazu eingerichtet ist, das Magnetfeld zwischen dem Messrohr und der Feldführung zu leiten,
wobei der erste Polschuh mindestens ein gefaltetes Polschuhblech aufweist, und wobei die Feldführung zumindest ein gefaltetes Feldführungsblech aufweist,
wobei der erste Polschuh und die Feldführung zumindest in einem Innenbereich der ersten Spule magnetisch und mechanisch kontaktiert sind, wobei der erste Polschuh sowie die Feldführung im Innenbereich der ersten Spulen den ersten Spulenkern zumindest teilweise ausbilden,
wobei ein erstes Polschuhblech eine Anzahl n1 Polschuhblechfaltungen aufweist, welche zumindest teilweise in den Innenbereich der ersten Spule hineinragen,
und wobei ein erstes Feldführungsblech eine erste Gruppe von Faltungen mit einer Anzahl n2 Feldführungsblechfaltungen aufweist, welche zumindest teilweise in den Innenbereich der ersten Spule hineinragen,
wobei jede Faltung zwei aneinander anliegende Lagen Blech aufweist,
wobei sich die n2 Feldführungsblechfaltungen und die n1 Polschuhblechfaltungen überlappen,
wobei gilt:
   falls ni = 1, dann nj =2 und ni <= nj und nj< ni+2,
   mit ni = (n1 oder n2) und nj = (n2 oder n1),
   wobei mindestens eine Polschuhblechfaltung zwischen zwei Feldführungsblechfaltungen angeordnet ist und mit diesen in mechanischem Kontakt steht und/oder wobei mindestens eine Feldführungsblechfaltung zwischen zwei Polschuhblechfaltungen angeordnet ist und mit diesen in mechanischem Kontakt steht.

Die Ausbildung von Faltungen, welche zueinander in Kontakt stehen, sorgt für einen guten Übergang des Magnetfelds zwischen Polschuh und Feldführung.

In einer Ausgestaltung weist eine Faltung entlang ihrer beiden Lagen Blech eine Faltungslänge auf,
wobei sich der mechanische Kontakt zwischen der Feldführungsblechfaltung und der Polschuhblechfaltung über einen Bereich erstreckt, welcher mindestens 60% und insbesondere mindestens 70% und bevorzugt mindestens 80% einer Faltungslänge der Polschuhblechfaltung oder einer Faltungslänge der Feldführungsblechfaltung abdeckt.

Die Faltungslänge bezieht sich dabei auf einen Bereich, in welchem zwei Lagen eines Blechs miteinander kontaktiert sind.

In einer Ausgestaltung weist das erste Polschuhblech ein erstes Ende, ein zweites Ende sowie einen Mittenbereich auf,
wobei der Mittenbereich das erste Ende mit dem zweiten Ende verbindet,
und wobei die mindestens eine Polschuhblechfaltung durch Falten des Mittenbereichs hergestellt ist,
wobei der erste Polschuh eine erste Fixierung aufweist, welche erste Fixierung zwischen dem Messrohr und dem ersten Polschuhblech angeordnet ist und das erste Ende sowie das zweite Ende jeweils zumindest teilweise mittels mindestens eines Greifelements umgreift, wobei die erste Fixierung aus einem Blech gefertigt ist.

Die Fixierung ist dazu eingerichtet, das erste Ende und das zweite Ende in einer festen Position zu halten, um magnetische Eigenschaften des Magnetsystems konstant zu halten.

In einer Ausgestaltung liegen das erste Ende sowie das zweite Ende in einer Ebene,
und/oder wobei das mindestens eine Greifelement eine Fixierfaltung ist, welche aus einem Grundkörper der ersten Fixierung heraussteht.

In einer Ausgestaltung sind Windungen der Spule dazu eingerichtet, die mindestens eine Polschuhblechfaltung sowie die mindestens eine Feldführungsblechfaltung in einer Querschnittsebene des Messrohrs gegeneinander zu pressen.

In einer Ausgestaltung weist das Magnetsystem mindestens eine Pressvorrichtung auf, welche Pressvorrichtung dazu eingerichtet ist, die mindestens eine Polschuhblechfaltung sowie die mindestens eine Feldführungsblechfaltung in einer Querschnittsebene des Messrohrs gegeneinander zu pressen,
wobei die Pressvorrichtung eine kraftschlüssige oder formschlüssige Verbindung aufweist, wobei die Verbindung insbesondere mindestens ein Element aus folgender Liste aufweist:
Klammerung, Verguss, Klebung, Nietung, Schraubung.

In einer Ausgestaltung weist das Magnetsystem auf einer der ersten Spule abgewandten Seite des Messrohrs eine zweite Spule mit einem zweiten Spulenkern und einem zweiten Polschuh aufweist, welche der ersten Spule sowie dem ersten Spulenkern sowie dem ersten Polschuh entsprechen und insbesondere gleich ausgestaltet sind,
wobei die Feldführung dazu eingerichtet ist, das Magnetfeld zwischen einer dem Messrohr abgewandten Seite der ersten Spule und einer dem Messrohr abgewandten Seite der zweiten Spule zu führen,
wobei der zweite Polschuh dazu eingerichtet ist, das Magnetfeld zwischen dem Messrohr und der Feldführung zu leiten.

In einer Ausgestaltung weist das erste Feldführungsblech eine zweite Gruppe von Faltungen auf, wobei der zweite Polschuh sowie die zweite Gruppe von Faltungen in einem Innenbereich der zweiten Spule den zweiten Spulenkern zumindest teilweise ausbilden.

In einer Ausgestaltung weist die Feldführung ein zweites Feldführungsblech auf, auf welchem zweiten Feldführungsblech die zweite Gruppe angeordnet ist,

In einer Ausgestaltung weist das erste Feldführungsblech sowie das zweite Feldführungsblech zwei Kontaktbereiche auf, mittels welcher Kontaktbereiche die Feldführungsbleche magnetisch sowie mechanisch verbunden sind.

In einer Ausgestaltung definieren die Messelektroden eine Querachse, wobei die Kontaktbereiche durch die Querachse geschnitten werden oder die Querachse zumindest teilweise umgeben.

In einer Ausgestaltung weist die Feldführung mindestens zwei Aufnahmeöffnungen auf, welche dazu eingerichtet sind, die Messelektroden bzw. Messelektrodenkontaktierungen aufzunehmen.

In einer Ausgestaltung weist die Feldführung mindestens ein Elektroblech nach der Norm DIN EN 10106 gemäß der Ausgabe 11-2007 oder DIN EN10107 gemäß der Ausgabe 10-2005 auf.

Im Folgenden wird die Erfindung anhand schematischer Ausführungsbeispiele beschrieben.
Fig. 1 zeigt einen Querschnitt durch ein erfindungsgemäßes magnetisch-induktives Durchflussmessgerät;
und Fig. 2 zeigt einen vergrößerten Ausschnitt eines in Fig. 1 gezeigten Spulenkerns;
und Fig. 3 a) und Fig. 3 b) skizzieren weitere erfindungsgemäße Ausgestaltungen eines Spulenkerns;
und Fig. 4 skizziert verschiedene Ausgestaltungsmöglichkeiten einer ersten Fixierung;
und Fig. 5 skizziert die Funktionsweise eines erfindungsgemäßen Durchflussmessgeräts.

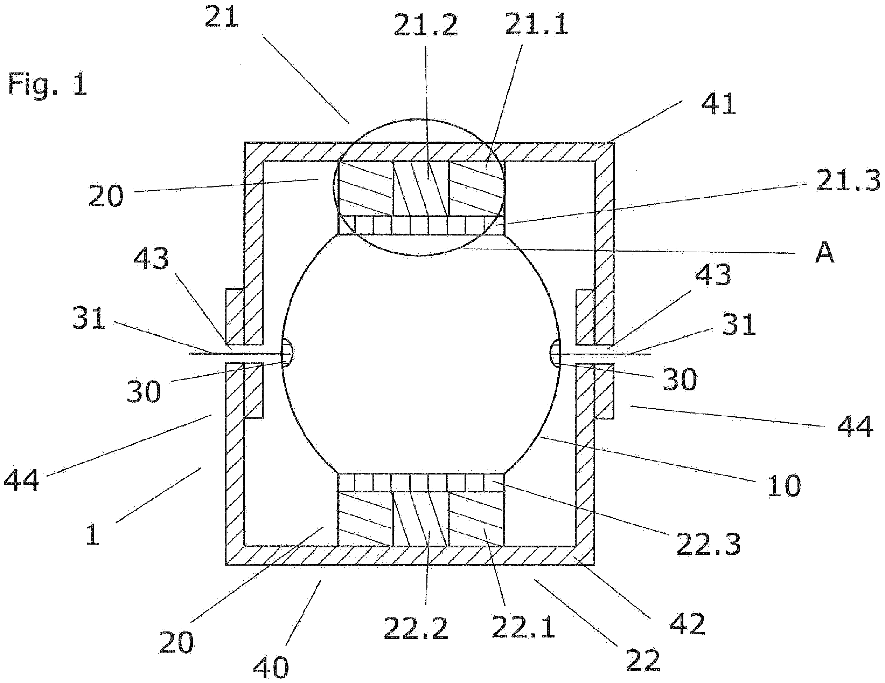

Fig. 1 zeigt einen skizzenhaften Querschnitt durch ein erfindungsgemäßes magnetisch-induktives Durchflussmessgerät 1 mit einem Messrohr 10, einem Magnetsystem 20 mit einem ersten Spulensystem 21 und einem zweiten Spulensystem 22, Messelektroden 30, und einer Feldführung 40. Das erste Spulensystem weist dabei eine erste Spule 21.1 und einen ersten

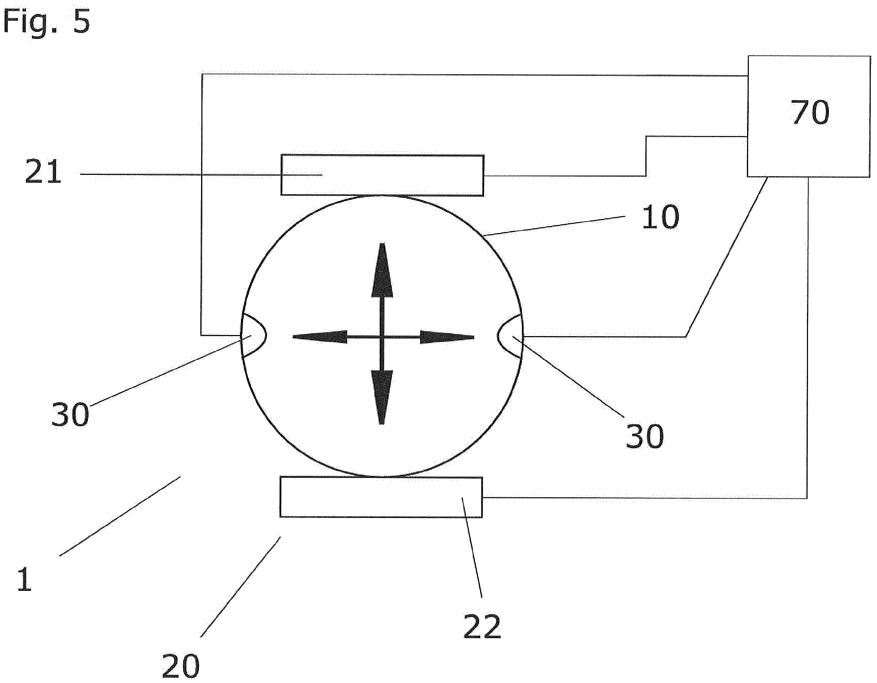

Polschuh 21.3 auf, wobei ein erster Spulenkern 21.2 im Inneren der ersten Spule angeordnet ist. Äquivalent weist das zweite Spulensystem 22 eine zweite Spule 22.1 und einen zweiten Polschuh 22.3 auf, wobei ein zweiter Spulenkern 22.2 im Inneren der zweiten Spule angeordnet ist. Das Magnetsystem ist dazu eingerichtet, ein Magnetfeld zu erzeugen, welches senkrecht zu einer Messrohrachse steht. Die Polschuhe liegen dabei auf dem Messrohr auf und sind dazu eingerichtet, das Magnetfeld zwischen Messrohr und der Feldführung zu leiten. Die Feldführung 40 ist dazu eingerichtet, das Magnetfeld außerhalb des Messrohrs 10 zwischen den Spulensystemen zu leiten. Die Feldführung weist ein erstes Feldführungsblech 41 und ein zweites Feldführungsblech 42 auf, welche in Kontaktbereichen 44 magnetisch und mechanisch miteinander verbunden sind. Alternativ kann die Feldführung auch nur ein Feldführungsblech aufweisen, wobei Enden des Feldführungsblechs in einem Kontaktbereich magnetisch und mechanisch miteinander verbunden sind. Die Messelektroden 30 sind galvanisch mit dem das Messrohr durchströmenden Medium verbunden, können aber auch kapazitiv mit dem Medium gekoppelt sein. Messelektrodenkontaktierungen 31 werden durch Aufnahmeöffnungen 43 zu einer in Fig. 5 gezeigten elektronischen Mess-/Betriebsschaltung geführt.

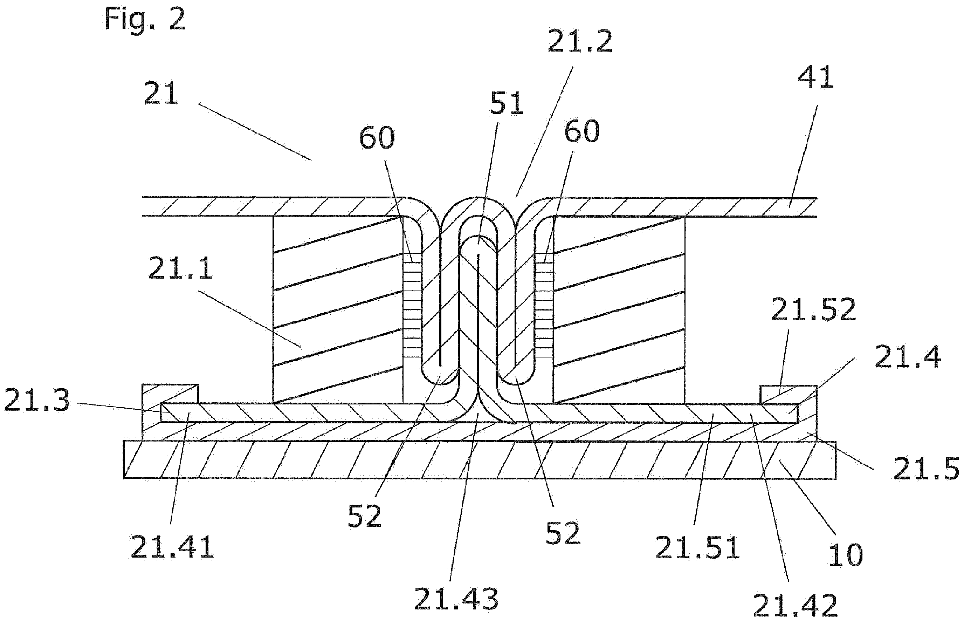

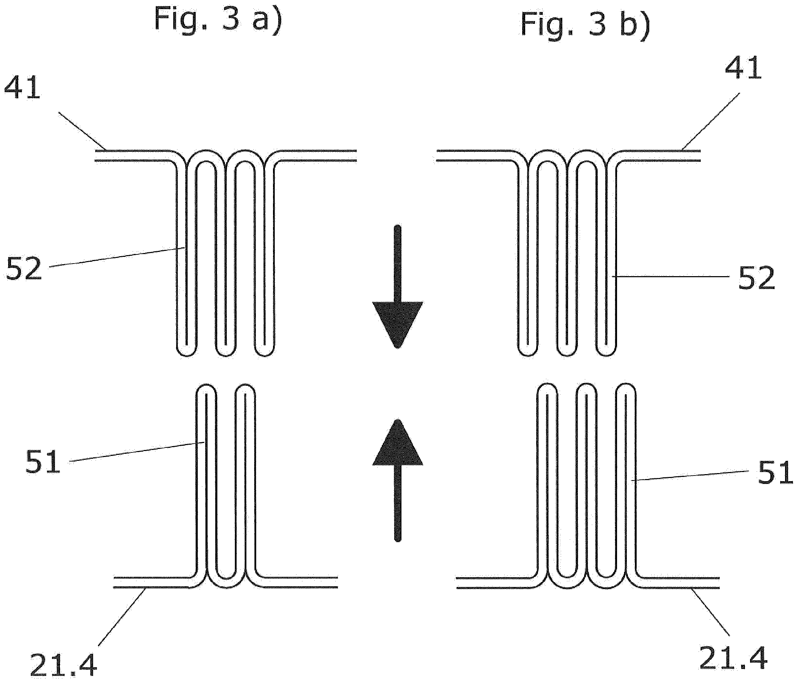

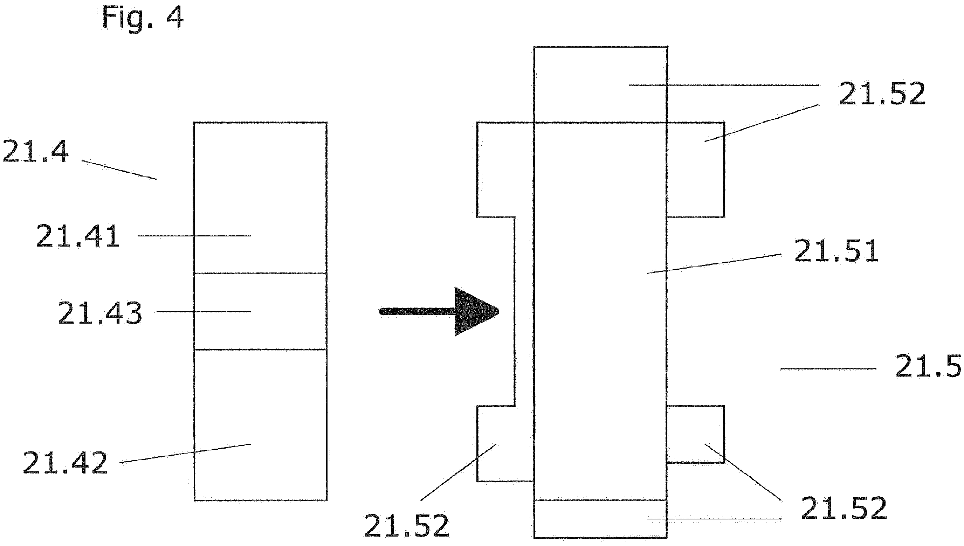

Fig. 2 zeigt eine in Fig.1 mit A gekennzeichnete Ausschnittsvergrößerung des ersten Spulensystems 21, wobei das erste Feldführungsblech 41 zwei Feldführungsblechfaltungen 52 aufweist, und wobei der erste Polschuh 21.3 ein erstes Polschuhblech 21.4 mit einer Polschuhblechfaltung 51 aufweist, welche Polschuhblechfaltung 51 zwischen den beiden Feldführungsblechfaltungen angeordnet ist und mit diesen eine mechanisch und magnetisch kontaktiert ist. Die Faltungen sind durch eine Pressvorrichtung 60 gegeneinander gepresst, um diese Kontaktierung fest und stabil zu halten. Die Pressvorrichtung weist eine kraftschlüssige Verbindung auf, wobei die kraftschlüssige Verbindung insbesondere mindestens ein Element aus folgender Liste aufweist: Klammerung, Verguss, Klebung, Nietung, Schraubung. Alternativ oder zusätzlich kann die erste Spule 21.1 für eine Pressung eingerichtet sein. Die Faltungen des Polschuhs sowie der Feldführung bilden somit den ersten Spulenkern 21.2 aus. Die Anzahl der Feldführungsblechfaltungen sowie die Anzahl der Polschuhblechfaltungen sind nicht auf das hier gezeigte Beispiel limitiert. Mögliche Konfigurationen sind in der Beschreibung zu Fig. 3 genauer erläutert. Das Polschuhblech 21.4 weist ein erstes Ende 21.41, ein zweites Ende 21.42 und einen Mittenbereich 21.43 auf, in welchem Mittenbereich die mindestens eine Polschuhblechfaltung angeordnet ist. Zur Stabilisierung und Fixierung des ersten Endes sowie des zweiten Endes weist der erste Polschuh eine erste Fixierung 21.5 auf, welche das erste Ende sowie das zweite Ende mittels mindestens einem Greifelement 21.52 fixiert, wobei das Greifelement aus einem Grundkörper 21.51 der ersten Fixierung hervorsteht. Die erste Fixierung ist dabei zwischen dem Messrohr und dem ersten Polschuhblech 21.5 angeordnet und stellt einen guten magnetischen Kontakt zwischen dem ersten Polschuh sowie dem Messrohr sicher. Mögliche Ausgestaltungen des mindestens einen Greifelements sind in Fig. 4 genauer beschrieben. Die in Fig. 2 gezeigten Merkmale des ersten Spulensystems sowie der Feldführung gelten entsprechend auch für das zweite Spulensystem mit einem zweiten Polschuhblech und einer zweiten Fixierung.

Fig. 3 a) skizziert eine Ausgestaltung des ersten Polschuhblechs 21.4, welches mit dem ersten Feldführungsblech 41 durch Zusammenführen kontaktierbar ist. Im hier gezeigten Fall weist das Feldführungsblech 41 n2 = 3 Feldführungsblechfaltungen 52 auf, und das Polschuhblech 21.4 weist n1 = n2 - 1 = 2 Polschuhblechfaltungen auf, wobei das Feldführungsblech und das Polschuhblech so zusammengeführt werden, dass die Polschuhblechfaltungen jeweils zwischen zwei Feldführungsblechfaltungen angeordnet ist. Alternativ kann die Anzahl der Polschuhblechfaltungen um 1 größer sein als die Anzahl der Feldführungsblechfaltungen, wobei für das Zusammenführen oben Aufgeführtes entsprechend gilt. Generell gilt, dass n1 sowie n2 jeweils größer oder gleich 1 sind.

Fig. 3 b) skizziert eine der in Fig. 3 a) gezeigten Ausgestaltung entsprechende Situation, wobei hier die Anzahl n2 der Feldführungsblechfaltungen 52 gleich der Anzahl n1 der Polschuhblechfaltungen ist, was zur Folge hat, dass nach Zusammenführen das erste Feldführungsblech 41 sowie das erste Polschuhblech 21.4 jeweils eine äußere Faltung aufweisen, welche nicht zwischen zwei Faltungen angeordnet ist. Hierbei gilt, dass n1 = n2 größer als 1 ist.

Die in Figs. 3 a) und 3 b) gezeigten Merkmale des ersten Polschuhblechs 21.4 sowie des ersten Feldführungsblechs gelten entsprechend auch für das zweite Spulensystem mit dem zweiten Polschuhblech und der zweiten Fixierung, wobei die Anzahlen n1 sowie n2 in Bezug auf das zweite Spulensystem nicht notwendigerweise aber vorteilhafterweise den Anzahlen n1 und n2 in Bezug auf das erste Spulensystem entsprechen.

Fig. 4 skizziert eine Aufsicht des ersten Polschuhblechs 21.4 mit dem ersten Ende 21.41, dem zweiten Ende 21.42 und dem Mittenbereich 21.43, sowie eine Aufsicht auf die erste Fixierung 21.5 mit dem Grundkörper 21.51 sowie mehreren beispielhaften Greifelementen 21.52. Nach Auflegen des ersten Polschuhblechs auf den Grundkörper der ersten Fixierung werden die Greifelemente um das erste Ende 21.41 bzw. um das zweite Ende 21.42 herum gefaltet, so dass die Enden durch mindestens ein Greifelement fixiert sind. Beispielsweise kann ein Greifelement an einem Ende des Grundkörpers angeordnet sein. Ein Greifelement kann auch an einer Seite des Grundkörpers angeordnet sein und ein Ende des ersten Polschuhblechs fixieren. Ein Greifelement kann auch entlang eines Großteils einer Seite des Grundkörpers angeordnet sein und beide Enden des ersten Polschuhblechs fixieren. Es ist vorteilhaft, wenn verschiedene Greifelemente nach dem Herumfalten sich gegenseitig nicht überlappen. Es ist bei Einrichtung ausschließlich seitlicher Greifelemente vorteilhaft, wenn das erste Ende 21.41 sowie das zweite Ende 21.42 von beiden Seiten fixiert sind.

Fig. 5 skizziert schematisch den Aufbau eines magnetisch-induktiven Durchflussmessgeräts 1, welches ein Messrohr 10 mit einer Messrohrachse aufweist. Ein Magnetsystem 20 mit einem ersten Spulensystem 21 und einem zweiten Spulensystem 22 ist dazu eingerichtet, ein senkrecht zu einer Messrohrachse stehendes Magnetfeld (vertikale Pfeile) auszubilden, um im Medium eine durchflussabhängige sowie magnetfeldabhängige, senkrecht zum Magnetfeld verlaufende elektrische Spannung (waagerechte Pfeile) zu induzieren. Zwei Messelektroden 30 sind dazu eingerichtet, die elektrische Spannung abzugreifen. Eine elektronische Mess-/Betriebsschaltung 70 ist dazu eingerichtet, die elektrische Spannung auszuwerten und eine durchflussabhängige Messgröße bereitzustellen, sowie das Magnetsystem 20 zu betreiben. Aus Gründen der Übersichtlichkeit ist die in Figs. 1 und 2 gezeigte Feldführung nicht gezeigt.

### Bezugszeichenliste

- 1: magnetisch-induktives Durchflussmessgerät
- 10: Messrohr
- 20: Magnetsystem
- 21: Erstes Spulensystem
- 21.1: Erste Spule
- 21.2: Erster Spulenkern
- 21.3: Erster Polschuh
- 21.4: Erstes Polschuhblech
- 21.41: Erstes Ende
- 21.42: Zweites Ende
- 21.43: Mittenbereich
- 21.5: Erste Fixierung
- 21.51: Grundkörper
- 21.52: Greifelement
- 22: Zweites Spulensystem
- 22.1: Zweite Spule
- 22.2: Zweiter Spulenkern
- 22.3: Zweiter Polschuh
- 30: Messelektrode
- 31: Messelektrodenkontaktierung
- 40: Feldführung
- 41: Erstes Feldführungsblech
- 42: Zweites Feldführungsblech
- 43: Aufnahmeöffnungen
- 44: Kontaktbereich
- 51: Polschuhblechfaltung
- 52: Feldführungsblechfaltung

- 60: Pressvorrichtung
- 70: Elektronische Mess-/Betriebsschaltung
- A: Ausschnitt

## Patentansprüche

1. Magnetisch-induktives Durchflussmessgerät (1) zur Messung der Durchflussgeschwindigkeit bzw. des Volumendurchflusses eines durch ein Messrohr strömenden Mediums umfassend:
Ein Messrohr (10) mit einer Messrohrachse;
Ein Magnetsystem (20) mit einem ersten Spulensystem (21) umfassend eine erste Spule (21.1) und einen innerhalb der ersten Spule angeordneten ersten Spulenkern (21.2), wobei das Magnetsystem zum Erzeugen eines Magnetfelds eingerichtet ist, welches senkrecht zur Messrohrachse steht;
Mindestens zwei Messelektroden (30) zum Abgreifen einer im Medium durch das Magnetfeld induzierten, durchflussabhängigen elektrischen Spannung, wobei die Messelektroden im oder am Messrohr angeordnet sind und dazu eingerichtet sind, die Spannung kapazitiv oder galvanisch abzugreifen;
Eine elektronische Mess-/Betriebsschaltung (70) zum Betreiben des Magnetsystems sowie der Messelektroden;
Eine Feldführung (40), welche dazu eingerichtet ist, das Magnetfeld zwischen einer dem Messrohr abgewandten Seite der ersten Spule und einer der ersten Spule abgewandten Seite des Messrohrs zu führen,
wobei das Magnetsystem einen ersten Polschuh (21.3) aufweist, welcher dazu eingerichtet ist, das Magnetfeld zwischen dem Messrohr und der Feldführung zu leiten,
**dadurch gekennzeichnet, dass**
der erste Polschuh mindestens ein gefaltetes erstes Polschuhblech (21.4) aufweist, und wobei die Feldführung zumindest ein gefaltetes Feldführungsblech aufweist,
wobei der erste Polschuh und die Feldführung zumindest in einem Innenbereich der ersten Spule magnetisch und mechanisch kontaktiert sind,
wobei der erste Polschuh sowie die Feldführung im Innenbereich der ersten Spule den ersten Spulenkern zumindest teilweise ausbilden,
wobei das erste Polschuhblech eine Anzahl n1 Polschuhblechfaltungen (51) aufweist, welche zumindest teilweise in den Innenbereich der ersten Spule hineinragen,
und wobei ein erstes Feldführungsblech (41) eine erste Gruppe von Faltungen mit einer Anzahl n2 Feldführungsblechfaltungen (52) aufweist, welche zumindest teilweise in den Innenbereich der ersten Spule hineinragen,
wobei jede Faltung zwei aneinander anliegende Lagen Blech aufweist,
wobei sich die n2 Feldführungsblechfaltungen und die n1 Polschuhblechfaltungen überlappen,
wobei gilt:
falls ni = 1, dann nj =2 und ni <= nj und nj< ni+2,
mit ni = (n1 oder n2) und nj = (n2 oder n1),
wobei mindestens eine Polschuhblechfaltung (51) zwischen zwei Feldführungsblechfaltungen (52) angeordnet ist und mit diesen in mechanischem Kontakt steht und/oder wobei mindestens eine Feldführungsblechfaltung (52) zwischen zwei Polschuhblechfaltungen (51) angeordnet ist und mit diesen in mechanischem Kontakt steht.

2. Magnetisch-induktives Durchflussmessgerät nach Anspruch 1,
wobei eine Faltung entlang ihrer beiden Lagen Blech eine Faltungslänge aufweist,
wobei sich der mechanische Kontakt zwischen der Feldführungsblechfaltung und der Polschuhblechfaltung über einen Bereich erstreckt, welcher mindestens 60% und insbesondere mindestens 70% und bevorzugt mindestens 80% einer Faltungslänge der Polschuhblechfaltung oder einer Faltungslänge der Feldführungsblechfaltung abdeckt.

3. Magnetisch-induktives Durchflussmessgerät nach Anspruch 2,
wobei das erste Polschuhblech (21.4) ein erstes Ende (21.41), ein zweites Ende (21.42) sowie einen Mittenbereich (21.43) aufweist,
wobei der Mittenbereich das erste Ende mit dem zweiten Ende verbindet,
und wobei die mindestens eine Polschuhblechfaltung durch Falten des Mittenbereichs hergestellt ist,
wobei der erste Polschuh eine erste Fixierung (21.5) aufweist, welches erste Fixierung zwischen dem Messrohr und dem ersten Polschuhblech angeordnet ist und das erste Ende sowie das zweite Ende jeweils zumindest teilweise mittels mindestens eines Greifelements (21.52) umgreift,
wobei die erste Fixierung aus einem Blech gefertigt ist.

4. Magnetisch-induktives Durchflussmessgerät nach Anspruch 2 oder 3,
wobei das erste Ende sowie das zweite Ende in einer Ebene liegen,
und/oder wobei das mindestens eine Greifelement eine Fixierfaltung ist, welche aus einem Grundkörper (21.51) der ersten Fixierung heraussteht.

5. Magnetisch-induktives Durchflussmessgerät nach einem der vorigen Ansprüche,
wobei Windungen der Spule dazu eingerichtet sind, die mindestens eine Polschuhblechfaltung sowie die mindestens eine Feldführungsblechfaltung in einer Querschnittsebene des Messrohrs gegeneinander zu pressen.

6. Magnetisch-induktives Durchflussmessgerät nach einem der vorigen Ansprüche,
wobei das Magnetsystem mindestens eine Pressvorrichtung (60) aufweist, welche Pressvorrichtung dazu eingerichtet ist, die mindestens eine Polschuhblechfaltung sowie die mindestens eine Feldführungsblechfaltung in einer Querschnittsebene des Messrohrs gegeneinander zu pressen,
wobei die Pressvorrichtung eine kraftschlüssige oder formschlüssige Verbindung aufweist, wobei die Verbindung insbesondere mindestens ein Element aus folgender Liste aufweist:
Klammerung, Verguss, Klebung, Nietung, Schraubung.

7. Magnetisch-induktives Durchflussmessgerät nach einem der vorigen Ansprüche,
wobei das Magnetsystem auf einer der ersten Spule abgewandten Seite des Messrohrs ein zweites Spulensystem (22) umfassend eine zweite Spule (22.1) mit einem zweiten Spulenkern (22.2) und einen zweiten Polschuh (22.3) aufweist, welche der ersten Spule sowie dem ersten Spulenkern sowie dem ersten Polschuh entsprechen und insbesondere gleich ausgestaltet sind,
wobei die Feldführung dazu eingerichtet ist, das Magnetfeld zwischen einer dem Messrohr abgewandten Seite der ersten Spule und einer dem Messrohr abgewandten Seite der zweiten Spule zu führen,
wobei der zweite Polschuh dazu eingerichtet ist, das Magnetfeld zwischen dem Messrohr und der Feldführung zu leiten,
wobei der zweite Polschuh und die Feldführung zumindest in einem Innenbereich der zweiten Spule magnetisch und mechanisch kontaktiert sind,
wobei der zweite Polschuh sowie die Feldführung im Innenbereich der zweiten Spule den zweiten Spulenkern zumindest teilweise ausbilden

8. Magnetisch-induktives Durchflussmessgerät nach Anspruch 7,
wobei das erste Feldführungsblech eine zweite Gruppe von Faltungen aufweist, wobei der zweite Polschuh sowie die zweite Gruppe von Faltungen in einem Innenbereich der zweiten Spule den zweiten Spulenkern zumindest teilweise ausbilden.

9. Magnetisch-induktives Durchflussmessgerät nach Anspruch 7,
wobei die Feldführung ein zweites Feldführungsblech (42) aufweist, auf welchem zweiten Feldführungsblech die zweite Gruppe angeordnet ist,

10. Magnetisch-induktives Durchflussmessgerät nach Anspruch 9,
wobei das erste Feldführungsblech sowie das zweite Feldführungsblech zwei Kontaktbereiche (44) aufweisen, mittels welcher Kontaktbereiche die Feldführungsbleche magnetisch sowie mechanisch verbunden sind.

11. Magnetisch-induktives Durchflussmessgerät nach Anspruch 10,
wobei die Messelektroden eine Querachse definieren, wobei die Kontaktbereiche durch die Querachse geschnitten werden oder die Querachse umgeben.

12. Magnetisch-induktives Durchflussmessgerät nach einem der vorigen Ansprüche,
wobei die Feldführung mindestens zwei Aufnahmeöffnungen (43) aufweist, welche dazu eingerichtet sind, die Messelektroden bzw. Messelektrodenkontaktierungen aufzunehmen.

13. Magnetisch-induktives Durchflussmessgerät nach einem der vorigen Ansprüche,
wobei die Feldführung mindestens ein Elektroblech aufweist.

## Claims

1. A magnetically inductive flowmeter (1) for measuring flow velocity, or volume flow, of a medium flowing through a measuring tube, comprising:
a measuring tube (10) having a measuring tube axis;
a magnet system (20) including a first coil system (21) comprising a first coil (21.1) and a first coil core (21.2) arranged within the first coil, wherein the magnet system is designed to produce a magnetic field perpendicular to the measuring tube axis;
at least two measuring electrodes (30) for sensing a flow-dependent electrical voltage induced in the medium by the magnetic field, wherein the measuring electrodes are arranged in or on the measuring tube and are designed to sense the voltage capacitively or galvanically;
an electronic measuring/operating circuit (70) for operating the magnet system and the measuring electrodes; and
a field guide (40) designed to guide the magnetic field between a side of the first coil far from the measuring tube and a side of the measuring tube far from the first coil,
wherein the magnet system has a first pole shoe (21.3) designed to lead the magnetic field between the measuring tube and the field guide,
wherein
the first pole shoe has at least one folded first pole shoe sheet metal piece (21.4), and wherein the field guide has at least one folded field guide sheet metal piece,
wherein the first pole shoe and the field guide are magnetically and mechanically in contact at least in an interior of the first coil,
wherein the first pole shoe and the field guide at least partially form the first coil core in the interior of the first coil,
wherein the first pole shoe sheet metal piece has a number n1 of pole shoe sheet metal piece folds (51) that protrude at least partially into the interior of the first coil,
and wherein a first field guide sheet metal piece (41) has a first group of folds with a number n2 of field guide sheet metal piece folds (52) that protrude at least partially into the interior of the first coil,
wherein each fold has two adjoining plies of sheet metal,
wherein the n2 field guide sheet metal piece folds and the n1 pole shoe sheet metal piece folds overlap,
wherein:
if ni = 1, then nj = 2 and ni <= nj and nj < ni + 2,
wherein ni = (n1 or n2) and nj = (n2 or n1), and
wherein at least one pole shoe sheet metal piece fold (51) is arranged between two field guide sheet metal piece folds (52) and is in mechanical contact with them and/or wherein at least one field guide sheet metal piece fold (52) is arranged between two pole shoe sheet metal piece folds (51) and is in mechanical contact with them.

2. The magnetically inductive flowmeter as claimed in claim 1,
wherein a fold has a fold length along its two plies of sheet metal,
wherein the mechanical contact between the field guide sheet metal piece fold and the pole shoe sheet metal piece fold extends over a region that covers at least 60% and in particular at least 70% and preferably at least 80% of a fold length of the pole shoe sheet metal piece fold or a fold length of the field guide sheet metal piece fold.

3. The magnetically inductive flowmeter as claimed in claim 2,
wherein the first pole shoe sheet metal piece (21.4) has a first end (21.41), a second end (21.42), and a central region (21.43),
wherein the central region connects the first end with the second end,
and wherein the at least one pole shoe sheet metal piece fold is produced by folding the central region,
wherein the first pole shoe has a first securement (21.5), which first securement is arranged between the measuring tube and the first pole shoe sheet metal piece and grips the first end and the second end, in each case at least partially, by means of at least one grip element (21.52),
wherein the first securement is produced from a sheet metal piece.

4. The magnetically inductive flowmeter as claimed in claim 2 or 3,
wherein the first end and the second end lie in a plane,
and/or wherein the at least one grip element is a securement fold that protrudes from a base (21.51) of the first securement.

5. The magnetically inductive flowmeter as claimed in one of the preceding claims,
wherein turns of the coil are designed to press the at least one pole shoe sheet metal piece fold and the at least one field guide sheet metal piece fold against one another in a cross sectional plane of the measuring tube.

6. The magnetically inductive flowmeter as claimed in one of the preceding claims,
wherein the magnet system has at least one pressing mechanism (60), which pressing mechanism is designed to press the at least one pole shoe sheet metal piece fold and the at least one field guide sheet metal piece fold against one another in a cross sectional plane of the measuring tube,
wherein the pressing mechanism has a force interlocking or shape interlocking connection, wherein the connection has in particular at least one element from the following list:
a clamp, a potting material, an adhesive bond, a rivet, and a screw.

7. The magnetically inductive flowmeter as claimed in one of the preceding claims,
wherein the magnet system has on a side of the measuring tube far from the first coil a second coil system (22) comprising a second coil (22.1) with a second coil core (22.2) and a second pole shoe (22.3) that correspond to and, in particular, are configured identically to the first coil and the first coil core and the first pole shoe,
wherein the field guide is designed to guide the magnetic field between a side of the first coil far from the measuring tube and a side of the second coil far from the measuring tube,
wherein the second pole shoe is designed to lead the magnetic field between the measuring tube and the field guide,
wherein the second pole shoe and the field guide are magnetically and mechanically in contact at least in an interior of the second coil,
wherein the second pole shoe and the field guide at least partially form the second coil core in the interior of the second coil.

8. The magnetically inductive flowmeter as claimed in claim 7,
wherein the first field guide sheet metal piece has a second group of folds, wherein the second pole shoe and the second group of folds at least partially form the second coil core in an interior of the second coil.

9. The magnetically inductive flowmeter as claimed in claim 7,
wherein the field guide has a second field guide sheet metal piece (42), on which second field guide sheet metal piece the second group is arranged.

10. The magnetically inductive flowmeter as claimed in claim 9,
wherein the first field guide sheet metal piece and the second field guide sheet metal piece have two contact areas (44), by means of which contact areas the field guide sheet metal pieces are connected magnetically and mechanically.

11. The magnetically inductive flowmeter as claimed in claim 10,
wherein the measuring electrodes define a transverse axis, wherein the contact areas are intersected by the transverse axis or surround the transverse axis.

12. The magnetically inductive flowmeter as claimed in one of the preceding claims,
wherein the field guide has at least two reception openings (43) designed to receive the measuring electrodes or measuring electrode contacts.

13. The magnetically inductive flowmeter as claimed in one of the preceding claims,
wherein the field guide has at least one electrical sheet metal piece.

## Revendications

1. Débitmètre électromagnétique (1) destiné à la mesure de la vitesse d'écoulement ou du débit volumique d'un produit s'écoulant à travers un tube de mesure, comprenant :
Un tube de mesure (10) avec un axe de tube de mesure ;
Un système magnétique (20) avec un premier système de bobines (21) comprenant une première bobine (21.1) et un premier noyau de bobine (21.2) disposé à l'intérieur de la première bobine, le système magnétique étant conçu pour générer un champ magnétique qui est perpendiculaire à l'axe du tube de mesure ;
Au moins deux électrodes de mesure (30) destinées à prélever une tension électrique dépendant du débit, induite dans le produit par le champ magnétique, les électrodes de mesure étant disposées dans ou sur le tube de mesure et étant conçues pour prélever la tension de manière capacitive ou galvanique ;
Un circuit électronique de mesure/d'exploitation (70) destiné à exploiter le système magnétique ainsi que les électrodes de mesure ;
Un guide de champ (40), lequel est conçu pour guider le champ magnétique entre un côté de la première bobine opposé au tube de mesure et un côté du tube de mesure opposé à la première bobine,
le système magnétique comprenant une première pièce polaire (21.3), laquelle est conçue pour guider le champ magnétique entre le tube de mesure et le guide de champ,
**caractérisé en ce que**
la première pièce polaire présente au moins une première tôle de pièce polaire pliée (21.4), le guide de champ présentant au moins une tôle de guidage de champ pliée,
la première pièce polaire et le guide de champ étant en contact magnétique et mécanique au moins dans une zone intérieure de la première bobine,
la première pièce polaire ainsi que le guide de champ formant au moins partiellement le noyau de la première bobine dans la zone intérieure de la première bobine,
la première tôle de pièce polaire présentant un nombre n1 de plis de tôle de pièce polaire (51), lesquels plis pénètrent au moins partiellement dans la zone intérieure de la première bobine,
et une première tôle de guidage de champ (41) comprenant un premier groupe de plis comprenant un nombre n2 de plis de tôle de guidage de champ (52), lesquels plis font saillie au moins partiellement dans la région intérieure de la première bobine,
chaque pli comprenant deux couches de tôle adjacentes,
les n2 plis de tôle de guidage de champ et les n1 plis de tôle de pièce polaire se chevauchant,
où :
si ni = 1, alors nj =2 et ni <= nj et nj< ni+2,
avec ni = (n1 ou n2) et nj = (n2 ou n1),
au moins un pli de tôle de pièce polaire (51) étant disposé entre deux plis de tôle de guidage de champ (52) et étant en contact mécanique avec ceux-ci et/ou au moins un pli de tôle de guidage de champ (52) étant disposé entre deux plis de tôle de pièce polaire (51) et étant en contact mécanique avec ceux-ci.

2. Débitmètre électromagnétique selon la revendication 1,
pour lequel un pli le long de ses deux couches de tôle présente une longueur de pli,
pour lequel le contact mécanique entre le pli de la tôle de guidage de champ et le pli de la tôle de la pièce polaire s'étend sur une zone qui couvre au moins 60 % et notamment au moins 70 % et de préférence au moins 80 % d'une longueur de pli de la tôle de pièce polaire ou d'une longueur de pli de la tôle de guidage de champ.

3. Débitmètre électromagnétique selon la revendication 2,
pour lequel la première tôle de pièce polaire (21.4) présente une première extrémité (21.41), une deuxième extrémité (21.42) ainsi qu'une zone centrale (21.43),
la zone centrale reliant la première extrémité à la deuxième extrémité,
et l'au moins un pli de tôle de pièce polaire étant réalisé par pliage de la zone centrale,
la première pièce polaire présentant une première fixation (21.5), laquelle première fixation est disposée entre le tube de mesure et la première tôle de pièce polaire et entoure la première extrémité ainsi que la deuxième extrémité respectivement au moins partiellement au moyen d'au moins un élément de préhension (21.52),
la première fixation étant fabriquée à partir d'une tôle.

4. Débitmètre électromagnétique selon la revendication 2 ou 3,
pour lequel la première extrémité ainsi que la deuxième extrémité sont situées dans un plan, et/ou
pour lequel l'au moins un élément de préhension est un pli de fixation qui dépasse d'un corps de base (21.51) de la première fixation.

5. Débitmètre électromagnétique selon l'une des revendications précédentes,
pour lequel des spires de la bobine sont adaptées pour presser l'un contre l'autre l'au moins un pli de tôle de pièce polaire ainsi que l'au moins un pli de tôle de guidage de champ dans un plan de section transversale du tube de mesure.

6. Débitmètre électromagnétique selon l'une des revendications précédentes,
pour lequel le système magnétique présente au moins un dispositif de pressage (60), lequel dispositif de pressage est conçu pour presser l'un contre l'autre l'au moins un pli de tôle de pièce polaire ainsi que l'au moins un pli de tôle de guidage de champ dans un plan de section transversale du tube de mesure,
le dispositif de pressage présentant une liaison par adhérence ou par complémentarité de forme, la liaison présentant notamment au moins un élément de la liste suivante :
Agrafage, scellement, collage, rivetage, vissage.

7. Débitmètre électromagnétique selon l'une des revendications précédentes,
pour lequel le système magnétique présente, sur un côté du tube de mesure opposé à la première bobine, un deuxième système de bobines (22) comprenant une deuxième bobine (22.1) avec un deuxième noyau de bobine (22.2) et une deuxième pièce polaire (22.3), qui correspondent à la première bobine ainsi qu'au premier noyau de bobine, ainsi qu'à la première pièce polaire, et sont notamment de conception identique,
le guide de champ étant conçu pour guider le champ magnétique entre un côté de la première bobine opposé au tube de mesure et un côté de la deuxième bobine opposé au tube de mesure,
la deuxième pièce polaire étant conçue pour guider le champ magnétique entre le tube de mesure et le guide de champ,
la deuxième pièce polaire et le guide de champ étant en contact magnétique et mécanique au moins dans une zone intérieure de la deuxième bobine,
la deuxième pièce polaire ainsi que le guide de champ formant au moins partiellement le deuxième noyau de bobine dans la zone intérieure de la deuxième bobine.

8. Débitmètre électromagnétique selon la revendication 7,
pour lequel la première tôle de guidage de champ présente un deuxième groupe de plis, la deuxième pièce polaire ainsi que le deuxième groupe de plis dans une zone intérieure de la deuxième bobine formant au moins partiellement le deuxième noyau de bobine

9. Débitmètre électromagnétique selon la revendication 7,
pour lequel le guide de champ présente une deuxième tôle de guidage de champ (42), sur laquelle deuxième tôle de guidage de champ est disposé le deuxième groupe.

10. Débitmètre électromagnétique selon la revendication 9,
pour lequel la première tôle de guidage de champ ainsi que la deuxième tôle de guidage de champ présentent deux zones de contact (44), au moyen desquelles les tôles de guidage de champ sont reliées magnétiquement ainsi que mécaniquement.

11. Débitmètre électromagnétique selon la revendication 10,
pour lequel les électrodes de mesure définissent un axe transversal, les zones de contact étant coupées par l'axe transversal ou entourant l'axe transversal.

12. Débitmètre électromagnétique selon l'une des revendications précédentes,
pour lequel le guide de champ présente au moins deux ouvertures de réception (43), lesquelles sont adaptées pour recevoir les électrodes de mesure ou les contacts d'électrodes de mesure.

13. Débitmètre électromagnétique selon l'une des revendications précédentes, pour lequel le guide de champ comprend au moins une tôle électrique.
